# FASCICULE DE BREVET EUROPEEN

(11) **EP 2 914 444 B1**
(45) Date de publication et mention de la délivrance du brevet: **08.06.2016**
(21) Numéro de dépôt: 13785839.5
(22) Date de dépôt: 29.10.2013
(51) Int. Cl.: B60C 1/00, D07B 1/06, C08L 9/06, B60C 9/00, C08F 236/10

(54) **CÂBLE GOMMÉ IN SITU COMPRENANT UNE COMPOSITION COMPRENANT UN COPOLYMÈRE DE STYRÈNE-BUTADIÈNE**
MIT EINER STYROL-BUTADIEN ENTHALTENDEN ZUSAMMENSETZUNG IN-SITU GUMMIERTES METALLSEIL
CORD RUBBERISED IN SITU BY A COMPOSITION COMPRISING A STYRENE-BUTADIENE COPOLYMER

(30) Priorité: 30.10.2012 FR 1260337
(43) Date de publication de la demande: 09.09.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: SALGUES, Nathalie, F-63040 Clermont-ferrand Cedex 9 (FR)
(74) Mandataire: Desbordes, Guillaume
(86) Numéro de dépôt international: PCT/EP2013/072551
(87) Numéro de publication internationale: WO 2014/067916

(56) Documents cités:
- WO-A1-2011/147710
- US-A- 4 503 204
- US-A1- 2012 102 909
- US-B1- 7 285 605

## Description

L'invention concerne un câble métallique gommé in situ pour le renforcement de pneumatiques, particulièrement de pneumatiques pour véhicules industriels lourds.

On connait de l'état de la technique, notamment du document WO2009/083213, un câble gommé in situ à deux couches comprenant des couches interne et externe et une couche d'une composition de caoutchouc gainant la couche interne. Ainsi, chaque capillaire ou interstice situé entre les fils de la couche interne et entre les fils des couches interne et externe est rempli au moins en partie, de manière continue ou non selon l'axe du câble, par la composition de caoutchouc.

On assemble ce câble, par exemple par câblage, dans une installation en mettant en oeuvre un procédé de fabrication dans lequel on enroule les fils de la couche interne en hélice. Puis, on fait passer la couche interne ainsi enroulée dans une tête d'extrusion pour la gainer de la couche de la composition de caoutchouc. Ensuite, on enroule les fils de la couche externe en hélice autour de la couche intermédiaire ainsi gainée. Puis, on fait passer le câble dans des moyens d'équilibrage de l'installation comprenant par exemple un retordeur ou un retordeur/dresseur. Enfin, on stocke le câble sur une bobine de stockage.

Dans le cas où l'on ne contrôle pas précisément la quantité de la composition de caoutchouc, soit la composition de caoutchouc déborde radialement à la périphérie du câble (cas où la quantité de la composition de caoutchouc est trop élevée), soit la composition de caoutchouc ne remplit pas tous les capillaires ou interstices du câble (cas où la quantité de la composition de caoutchouc est trop faible). En particulier, dans le cas où la quantité de la composition de caoutchouc est trop élevée, l'excès de cette composition se dépose dans l'installation, notamment sur les moyens d'équilibrage et les moyens de stockage. Or, l'encrassement continu de ces moyens par la gomme nécessite des arrêts réguliers de l'installation afin de les nettoyer, ce qui n'est pas souhaitable si l'on veut exploiter en continu l'installation.

Même s'il est efficace, le contrôle précis de la quantité de la composition de caoutchouc est industriellement relativement contraignant.

L'invention a donc pour but un moyen simple et peu contraignant industriellement d'éviter le débordement radial de la composition de caoutchouc.

A cet effet, l'invention a pour objet un câble métallique gommé in situ par une composition de caoutchouc comprenant un copolymère de styrène-butadiène comprenant :
- une proportion en motifs styréniques comprise entre 25 et 35 % bornes incluses en poids du poids total du copolymère, et
- une proportion de liaison trans-1,4 comprise entre 73 et 83 % bornes incluses en poids du poids total de la partie butadiènique du copolymère.

Le copolymère de styrène-butadiène confère à la composition de caoutchouc une fluidité inférieure à celle conférée par d'autres élastomères diéniques, notamment le caoutchouc naturel. Ainsi, lors du gainage du câble selon l'invention, on réduit, voire on supprime, le risque de débordement radial de la composition de caoutchouc.

Le copolymère comprend des motifs issus de la copolymérisation du styrène, par exemple des motifs styréniques (d'un poids y). Le copolymère comprend également des motifs issus de la copolymérisation du butadiène, par exemple des motifs 1,4 trans-butène formant des liaisons trans-1,4 (d'un poids x) et éventuellement des motifs 1,4 cis-butène formant des liaisons cis-1,4 (d'un poids n) et vinyliques (d'un poids m, également appelés motifs 1,2 butène).

Ainsi, conformément à l'invention, 25% ≤ y/(n+m+x+y) ≤ 35% et 73% ≤ x/(n+m+x) ≤ 83%.

De manière connue, le copolymère de styrène-butadiène (SBR pour «stryrene-butadiene rubber») ne doit pas être confondu avec les élastomères thermoplastiques issus de la polymérisation de blocs de monomères styrène-butadiène identiques, également appelés copolymères blocs. Ainsi, le copolymère de styrène-butadiène est diénique, non thermoplastique.

Par composition de caoutchouc, on entend que la composition comprend au moins un élastomère ou un caoutchouc (les deux termes étant synonymes) et au moins un additif.

Dans la présente description, sauf indication expresse différente, tous les pourcentages (%) indiqués sont des % en poids. Le sigle « pce » signifie parties en poids pour cent parties d'élastomère solide.

Le câble de l'invention est un câble gommé in situ, c'est-à-dire qu'il est gommé de l'intérieur, pendant sa fabrication même (donc à l'état brut de fabrication), par la gomme. En d'autres termes, chacun des capillaires ou interstices (les deux termes interchangeables désignant les vides; espaces libres en l'absence de la composition de caoutchouc) situés entre les fils d'une même couche et de deux couches adjacentes, sont remplis au moins en partie, de manière continue ou non selon l'axe du câble, par la composition de caoutchouc.

Avantageusement, la proportion en motifs styréniques est comprise entre 27 et 31 % bornes incluses en poids du poids total du copolymère, et

Avantageusement, la proportion de liaison trans-1,4 est comprise entre 75 et 81 % bornes incluses en poids du poids total de la partie butadiènique du copolymère.

De préférence, le copolymère comprend une proportion de liaisons cis-1,4 comprise entre 12 et 21 % bornes incluses, de préférence entre 14 et 19 % bornes incluses en poids du poids total de la partie butadiènique du copolymère.

De préférence, le copolymère comprend une proportion en motifs vinyliques comprise entre 1 et 7 % bornes incluses, de préférence entre 3 et 5 % bornes incluses en poids du poids total de la partie butadiènique du copolymère.

La composition peut contenir, en plus du copolymère de styrène-butadiène confirme à l'invention un ou plusieurs autres élastomères diéniques, par exemple du caoutchouc naturel.

Dans un mode de réalisation, la composition de caoutchouc comprend entre 50 et 100 pce bornes incluses, de préférence entre 70 et 100 pce bornes incluses et plus préférentiellement entre 80 et 100 pce bornes incluses du copolymère de styrène-butadiène.

Dans un mode de réalisation préférentiel, la composition comprend en tant que seul élastomère diénique le copolymère de styrène-butadiène. En d'autres termes, dans ce mode de réalisation, la composition ne comprend pas d'autres élastomères diéniques que le copolymère de styrène-butadiène, ou bien encore le copolymère de styrène-butadiène constitue le seul élastomère diénique de la composition.

Dans la présente description, sauf indication expresse différente, tous les pourcentages (%) indiqués sont des % en poids. Le sigle « pce » signifie parties en poids pour cent parties d'élastomère solide.

De préférence, la composition comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) a sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (Si02), ou du type alumineuse, en particulier de l'alumine (A1203). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, des lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Le taux de charge renforçante totale (noir de carbone et/ou charge inorganique renforçante telle que silice) est compris dans un domaine de 10 à 100 pce bornes incluses, plus préférentiellement de 20 à 90 pce bornes incluses, plus particulièrement de 30 à 80 pce bornes incluses.

Le noir de carbone peut avantageusement constituer la charge renforçante majoritaire, et de préférence la seule charge renforçante. Par majoritaire, on comprend que la proportion en poids de noir de carbone est supérieure à la proportion en poids du reste des autres charges renforçantes de la composition, que ces charges soient organiques ou inorganiques, comme par exemple la silice.

De préférence, la composition de caoutchouc comprend entre 20 et 70 pce bornes incluses, de préférence entre 30 et 70 pce bornes incluses et plus préférentiellement entre 35 et 60 pce bornes incluses de noir de carbone.

Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

De préférence, la composition comprend des additifs divers.

Les compositions peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes telles que des bismaleimides, par exemple de la colophane, des accepteurs (par exemple résine phénolique novolaque) ou des donneurs de méthylène (par exemple HMT ou H3M) et des charges non renforçantes telles que de la craie ou du talc.

De préférence, on utilise couramment un promoteur d'adhésion, par exemple un sel de cobalt ou de nickel, pour les compositions destinées à être au contact d'un élément de renfort métallique.

Dans un mode de réalisation, la composition comprend un système de réticulation, plus préférentiellement de vulcanisation.

Dans ce mode de réalisation, le système de réticulation, ici de vulcanisation, est à base d'agents donneurs de soufre, par exemple du soufre, et/ou de peroxyde et/ou de bismaléimides, et comprend des accélérateurs de vulcanisation, des activateurs de vulcanisation, des retardateurs de vulcanisation.

Le système de vulcanisation comprend du soufre et un accélérateur. De préférence, l'accélérateur est choisi parmi le tétrabenzylthiuram disulfure (en abrégé "TBZTD") et la famille des sulfénamides constituée par le disulfure de 2-mercaptobenzothiazyle (en abrégé "MBTS"), le N-cyclohexyl-2-benzothiazyle sulfénamide (en abrégé "CBS"), le N,N-dicyclohexyl-2-benzothiazyle sulfénamide (en abrégé "DCBS"), le N-ter-butyl-2-benzothiazyle sulfénamide (en abrégé "TBBS"), le N-ter-butyl-2-benzothiazyle sulfénimide (en abrégé "TBSI") et les mélanges de ces composés.

Le système de vulcanisation comprend d'autres accélérateurs et activateurs de vulcanisation tels que l'oxyde de zinc, l'acide stéarique, un dérivé guanidique, par exemple la diphénylguanidine). Le système de vulcanisation comprend également un retardateur de vulcanisation tel que le N-(Cyclohexylthio)phthalimide (en abrégé "CTP").

Le soufre ou agent donneur de soufre est utilisé à un taux préférentiel compris entre 0,5 et 10 pce bornes incluses, plus préférentiellement compris entre 0,5 et 5,0 pce bornes incluses. L'ensemble des accélérateurs, retardateurs et activateurs de vulcanisation est utilisé à un taux préférentiel compris entre 0,5 et 15 pce bornes incluses. L'accélérateur primaire de vulcanisation est utilisé à un taux préférentiel compris entre 0,5 et 10 pce bornes incluses, plus préférentiellement compris entre 0,5 et 5,0 pce bornes incluses.

Avantageusement, la température de transition vitreuse du copolymère de styrène-butadiène mesurée selon la norme ASTM D-3418 est comprise entre -51°C et -59°C bornes incluses et de préférence entre -53°C et -57°C bornes incluses.

De préférence, la plasticité Mooney de la composition est supérieure ou égale à 70 unités Mooney, de préférence à 75 unités Mooney et plus préférentiellement à 80 unités Mooney.

Selon un mode de réalisation préférentiel, sur toute portion de câble de longueur égale à 3 cm, plus préférentiellement égale à 2 cm, chaque capillaire ou interstice décrit ci-dessus comporte au moins un bouchon de gomme ; en d'autres termes et préférentiellement, il existe au moins un bouchon de gomme tous les 3 cm, préférentiellement tous les 2 cm de câble, qui obstrue chaque capillaire ou interstice du câble de telle manière que, au test de perméabilité à l'air décrit ci-dessous, ce câble présente, pour au moins 90% des mesures, un débit d'air moyen inférieur à 2 cm³/min, plus préférentiellement inférieur à ou au plus égal à 0,2 cm³/min.

Dans un mode de réalisation, le câble comprend plusieurs couches de fils, au moins une couche de fils étant gainée par la composition de caoutchouc.

Dans un mode de réalisation, le câble comprend au moins une couche saturée de N fils, c'est-à-dire qu'il n'existe pas suffisamment de place dans cette couche pour y ajouter au moins un (N+1)ème fil du même diamètre que les N fils de cette couche, N représentant alors le nombre maximal de fils enroulables en une couche autour de la couche.

Dans un autre mode de réalisation, le câble comprend au moins une couche insaturée de N fils, c'est-à-dire qu'il existe suffisamment de place dans cette couche pour y ajouter au moins un (N+1)ième fil du même diamètre que les N fils de cette couche.

Dans un mode de réalisation, le câble est compact. Les couches du câble sont alors enroulées dans le même sens de torsion (S ou Z) et au même pas. Dans de tels câbles à couches compacts, la compacité est telle que pratiquement aucune couche distincte de fils n'est visible ; il en résulte que la section transversale de tels câbles a un contour qui est polygonal et non cylindrique.

Dans un mode de réalisation, le câble est non-compact, également appelé à couches cylindriques. Les couches du câble sont enroulées soit à des pas différents soit selon des sens de torsion différents.

Indépendamment les uns des autres et d'une couche à l'autre, le ou les fils des différentes couches sont de préférence en acier, plus préférentiellement en acier au carbone. Mais il est bien entendu possible d'utiliser d'autres aciers, par exemple un acier inoxydable, ou d'autres alliages.

Par câble métallique, on entend par définition un câble formé de fils constitués majoritairement (c'est-à-dire pour plus de 50% de ces fils) ou intégralement (pour 100% des fils) d'un matériau métallique. L'invention est préférentiellement mise en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est utilisé, sa teneur en carbone (% en poids d'acier) est de préférence comprise entre 0,4% et 1,2%, notamment entre 0,5% et 1,1% ; ces teneurs représentent un bon compromis entre les propriétés mécaniques requises pour le pneumatique et la faisabilité des fils. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement.

Selon un mode de réalisation préférentiel, l'acier utilisé est recouvert d'une couche de laiton (alliage Zn-Cu) ou de zinc. On rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

L'homme du métier sait comment fabriquer des fils d'acier présentant de telles caractéristiques, en ajustant notamment la composition de l'acier et les taux d'écrouissage final de ces fils, en fonction de ses besoins propres particuliers, en utilisant par exemple des aciers au carbone micro-alliés contenant des éléments d'addition spécifiques tels que Cr, Ni, Co, V, ou divers autres éléments connus (voir par exemple *Research Disclosure* 34984 - *"Micro-alloyed steel cord constructions for tyres" -* mai 1993 ; *Research Disclosure* 34054 - *"High tensile strength steel cord constructions for tyres* "- août 1992).

Dans un mode de réalisation, le câble comprend une couche interne de fils et une couche externe de fils enroulés autour de la couche interne. Un tel câble est du type à deux couches. De préférence, le câble comprend une couche de la composition de caoutchouc gainant la couche interne.

De façon classique, le câble à deux couches présente une structure M+N avec, par exemple, M=3, N=9.

Dans un autre mode de réalisation, le câble comprend une couche intermédiaire de fils enroulés autour de la couche interne, les fils de la couche externe étant enroulés autour de la couche intermédiaire. Un tel câble est du type à trois couches. De préférence, le câble comprend une couche interne de la composition de caoutchouc gainant la couche interne et/ou une couche intermédiaire de la composition de caoutchouc gainant la couche intermédiaire.

De façon classique, le câble à trois couches présente une structure M+N+P avec, par exemple, M=1, N=6 et P=12.

Dans les deux modes de réalisation précédents, le câble comprend une couche de la composition de caoutchouc gainant au moins une couche non-externe du câble.

Dans un mode de réalisation, le câble comprend plusieurs couches de torons, au moins une couche de torons étant gainée par la composition de caoutchouc.

Un tel câble est appelé câble multitorons et présente, par exemple, une structure (N+M)x(P+Q), c'est-à-dire comprenant une couche interne de N toron(s) autour de laquelle est enroulée une couche externe de M torons. Chaque toron de couche interne et externe comprend une couche interne de P fils autour de laquelle est enroulée une couche externe de Q fils. Un exemple de câble multitorons est celui de structure (1+6)x(3+9). Dans ce mode de réalisation, au moins une couche de torons est gainée indépendamment du fait que les couches de fils de chaque toron soient également gainées ou non.

L'invention a pour autre objet un produit semi-fini comprenant un câble métallique tel que défini ci-dessus noyé dans une composition de caoutchouc d'enrobage.

Des exemples de produits semi-finis sont des nappes d'armatures de sommet, et des nappes d'armatures de carcasse.

Selon un mode de réalisation de l'invention, la composition de caoutchouc de gainage peut être choisie identique à la composition de caoutchouc d'enrobage au contact de laquelle elle est. Ainsi, il n'y a aucun problème de compatibilité entre les compositions de gainage et d'enrobage.

Selon un autre mode de réalisation de l'invention, la composition de caoutchouc de gainage peut être choisie différente de la composition de caoutchouc d'enrobage au contact de laquelle elle est. Bien entendu, on pourra ajuster les compositions de gainage et d'enrobage en vue d'optimiser la compatibilité et les propriétés de chacune.

En outre, l'invention a pour objet un pneumatique comprenant un câble métallique tel que défini ci-dessus.

Par ailleurs, l'invention a pour objet une utilisation dans un câble gommé in situ d'un copolymère de styrène-butadiène comprenant :
- une proportion en motifs styréniques comprise entre 25 et 35 % bornes incluses en poids du poids total du copolymère, et
- une proportion de liaison trans-1,4 comprise entre 73 et 83 % bornes incluses en poids de la poids total de la partie butadiènique du copolymère,
dans une composition de caoutchouc comme contrôleur de viscosité.

Enfin, l'invention a pour objet un procédé de fabrication d'un câble métallique gommé in situ par une composition de caoutchouc, dans lequel :
- on fabrique la composition de caoutchouc comprenant un copolymère de styrène-butadiène comprenant :
- une proportion en motifs styréniques comprise entre 25 et 35 % bornes incluses en poids du poids total du copolymère, et
- une proportion de liaison trans-1,4 comprise entre 73 et 83 % bornes incluses en poids du poids total de la partie butadiènique du copolymère,
- on gaine au moins une partie interne du câble métallique avec la composition de caoutchouc entre deux étapes d'assemblage du câble métallique.

L'invention sera mieux comprise à la lecture de la description qui va suivre, donnée uniquement à titre d'exemple non limitatif et faite en se référant aux dessins dans lesquels:
- la figure 1 une vue en coupe perpendiculaire à la direction circonférentielle d'un pneumatique selon l'invention ;
- la figure 2 est une vue en coupe perpendiculaire à l'axe du câble (supposé rectiligne et au repos) d'un câble selon un premier mode de réalisation de l'invention;
- les figures 3 à 5 sont des vues analogues à celle de la figure 2 de câbles respectivement selon des deuxième, troisième et quatrième modes de réalisation ; et
- la figure 6 est une vue analogue à celle de la figure 2 d'un câble multitorons selon l'invention.

### EXEMPLE DE PNEUMATIQUE SELON L'INVENTION

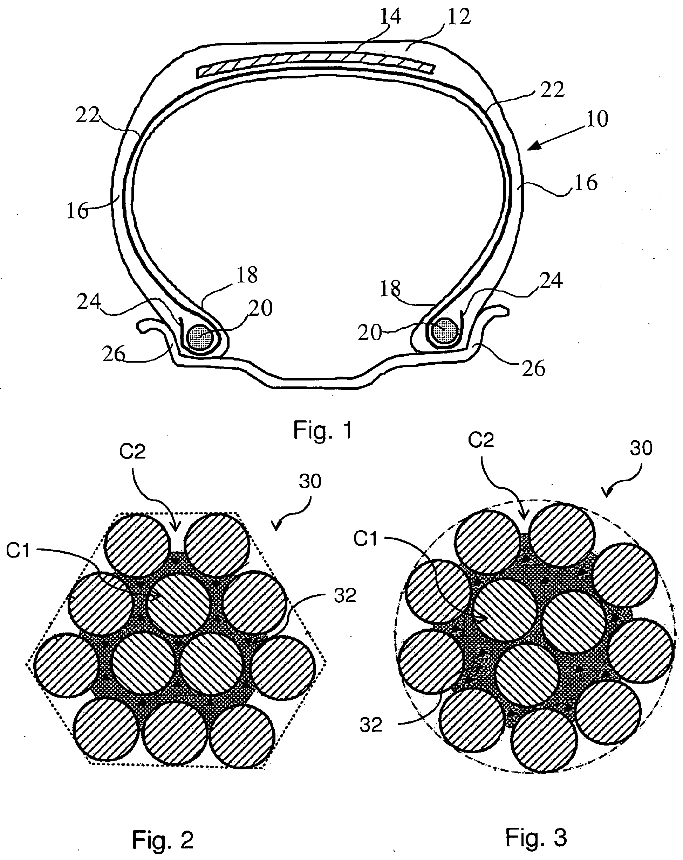

On a représenté sur la figure 1 un exemple de pneumatique selon l'invention désigné par la référence générale 10.

Le pneumatique 10 comporte un sommet 12 renforcé par une armature de sommet 14, deux flancs 16 et deux bourrelets 18, chacun de ces bourrelets 18 étant renforcé avec une tringle 20. Le sommet 12 est surmonté d'une bande de roulement non représentée sur cette figure schématique. Une armature de carcasse 22 est enroulée autour des deux tringles 20 dans chaque bourrelet 18 et comprend un retournement 24 disposé vers l'extérieur du pneumatique 10 qui est ici représenté monté sur une jante 26.

L'armature de carcasse 22 est de manière connue en soi constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 18 et passe par le milieu de l'armature de sommet 14).

Chaque armature de sommet 14 et de carcasse 22 comporte respectivement au moins une nappe de sommet et de carcasse dont tout ou partie des câbles de renforcement sont des câbles métalliques conformes à l'invention.

Dans l'armature de sommet 14, schématisée de manière très simple sur la figure 1, on comprendra que les câbles de l'invention peuvent par exemple renforcer tout ou partie des nappes sommet de travail, ou des nappes (ou demi-nappes) sommet de triangulation et/ou des nappes sommet de protection, lorsque de telles nappes sommet de triangulation ou de protection sont utilisées. Outre les nappes de travail, celles de triangulation et/ou de protection, l'armature de sommet 14 du pneumatique de l'invention peut bien entendu comporter d'autres nappes sommet, par exemple une ou plusieurs nappes sommet de frettage.

Le pneumatique 10 est destiné par exemple à des véhicules choisis parmi les véhicules de tourisme, les véhicules industriels, ces derniers étant choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention. De préférence, le pneumatique 10 est destiné aux véhicules industriels décrits ci-dessus. Plus préférentiellement, le pneumatique est destiné à un véhicule de type poids lourd.

### EXEMPLES DE CABLES SELON L'INVENTION

On a représenté sur la figure 2 un exemple de câble 30 selon un premier mode de réalisation. Le câble 30 est métallique et du type à deux couches, indépendamment de la présence ou non d'une couche de frettage.

Le câble 30 comprend une couche interne C1 constituée de M fils internes enroulés en hélice au pas p1. Ici, M=3.

Le câble 30 comprend également une couche intermédiaire C2 constituée de N fils intermédiaires enroulés en hélice au pas p2 autour de la couche interne C1. Ici, N=9.

Les sens d'enroulement des fils de couches sont tous identiques, c'est-à-dire soit dans la direction S (disposition "S/S"), soit dans la direction Z (disposition "Z/Z").

Le câble 30 est du type compact. Toutes les couches de fils le constituant présentent le même pas (p1=p2) et le même sens d'enroulement (S ou Z). Chaque couche C1, C2 présente une enveloppe non-cylindrique donnant à la couche correspondante C1, C2 respectivement son contour polygonal.

Chaque diamètre d1, d2 est compris entre 0,22 et 0,50 mm bornes incluses. Ici, tous les fils des couches C1, C2 présentent le même diamètre d1=d2.

Les fils des couches C1, C2 sont de préférence en acier au carbone revêtu de laiton. Les fils en acier au carbone sont préparés de manière connue, en partant par exemple de fils machine (diamètre 5 à 6 mm) que l'on écrouit tout d'abord, par laminage et/ou tréfilage, jusqu'à un diamètre intermédiaire voisin de 1 mm.

L'acier utilisé pour le câble 10 est un acier au carbone dont la teneur en carbone est de 0,7%, le reste étant constitué de fer et des impuretés inévitables habituelles liées au procédé de fabrication de l'acier. En variante, on utilise un acier au carbone dont la teneur en carbone est de 0,92% environ et comportant 0,2% de chrome environ. Les fils de diamètre intermédiaire subissent un traitement de dégraissage et/ou décapage, avant leur transformation ultérieure. Après dépôt d'un revêtement de laiton sur ces fils intermédiaires, on effectue sur chaque fil un écrouissage dit "final" (i.e., après le dernier traitement thermique de patentage), par tréfilage à froid en milieu humide avec un lubrifiant de tréfilage qui se présente par exemple sous forme d'une émulsion ou d'une dispersion aqueuse. Le revêtement de laiton qui entoure les fils a une épaisseur très faible, nettement inférieure au micromètre, par exemple de l'ordre de 0,15 à 0,30 µm, ce qui est négligeable par rapport au diamètre des fils en acier. Bien entendu, la composition de l'acier du fil en ses différents éléments (par exemple C, Cr, Mn) est la même que celle de l'acier du fil de départ.

Le câble 30 comprend également une couche 32 d'une composition de caoutchouc gainant la couche interne C1. Pour toute longueur de câble de 2 cm ou plus, la couche de gomme 32 est présente dans le canal central formé par les trois fils d'âme et dans chacun des interstices ou capillaires situes entre les M fils d'âme et les N fils de la couche externe C2 localisés par des triangles noirs sur les figures.

La composition de caoutchouc de la couche 32 comprend un élastomère diènique, en l'espèce un copolymère de styrène-butadiène (SBR). La composition de caoutchouc 32 comprend entre 50 et 100 pce bornes incluses, de préférence entre 70 et 100 pce bornes incluses et plus préférentiellement entre 80 et 100 pce bornes incluses du copolymère de styrène-butadiène. En l'espèce, le copolymère de styrène-butadiène constitue la totalité (100 pce) de l'élastomère diénique.

La composition 32 comprend également une charge renforçante, un système de réticulation comprenant du soufre, un accélérateur et divers additifs.

Le copolymère de styrène-butadiène comprend une proportion en motifs styréniques comprise entre 25 et 35 % bornes incluses en poids du poids total du copolymère, et une proportion de liaison trans-1,4 comprise entre 73 et 83 % bornes incluses en poids du poids total de la partie butadiènique du copolymère.

Entre autres caractéristiques optionnelles du copolymère de styrène-butadiène, la proportion en motifs styréniques est comprise entre 27 et 31 % bornes incluses en poids du poids total du copolymère, ici 29 %.

En outre, par exemple, la proportion de liaison trans-1,4 est comprise entre 73 et 83 % bornes incluses en poids du poids total de la partie butadiènique du copolymère, ici 78 %.

De préférence, le copolymère comprend une proportion de liaisons cis-1,4 comprise entre 12 et 21 % bornes incluses, de préférence entre 14 et 19 % bornes incluses en poids du poids total de la partie butadiènique du copolymère, ici 15 %.

Optionnellement, le copolymère comprend une proportion en motifs vinyliques comprise entre 1 et 7 % bornes incluses, de préférence entre 3 et 5 % bornes incluses en poids du poids total de la partie butadiènique du copolymère.

Par exemple, la température de transition vitreuse Tg du copolymère de styrène-butadiène mesurée selon la norme ASTM D-3418 est comprise entre -51°C et -59°C bornes incluses et de préférence entre -53°C et -57°C bornes incluses, ici Tg= -55°C.

De préférence, la charge renforçante comprenant majoritairement en poids du noir de carbone, par exemple entre 20 et 70 pce bornes incluses, de préférence entre 30 et 70 pce bornes incluses et plus préférentiellement entre 35 et 60 pce bornes incluses de noir de carbone, ici 45 pce.

De préférence, la plasticité Mooney de la composition est supérieure ou égale à 70 unités Mooney et de préférence à 75 unités Mooney et plus préférentiellement à 80 unités Mooney, ici égale à 80 unités Mooney.

On a représenté sur la figure 3 un exemple de câble selon un deuxième mode de réalisation. Les éléments analogues à ceux illustrés en référence au précédent mode de réalisation sont désignés par des références identiques.

A la différence du câble selon le premier mode, le câble 30 du deuxième mode est du type à couches cylindriques.

Chaque couche C1, C2 présente une enveloppe cylindrique donnant à chaque couche correspondante C1, C2 son contour sensiblement circulaire.

Dans une variante, les sens d'enroulement des fils de couches sont tous identiques, c'est-à-dire soit dans la direction S (disposition "S/S"), soit dans la direction Z (disposition "Z/Z") et p1≠p2. Dans une autre variante, les sens d'enroulement des fils de couches sont différents et p1=p2. Dans encore une autre variante, les sens d'enroulement des fils de couches sont différents et p1≠p2.

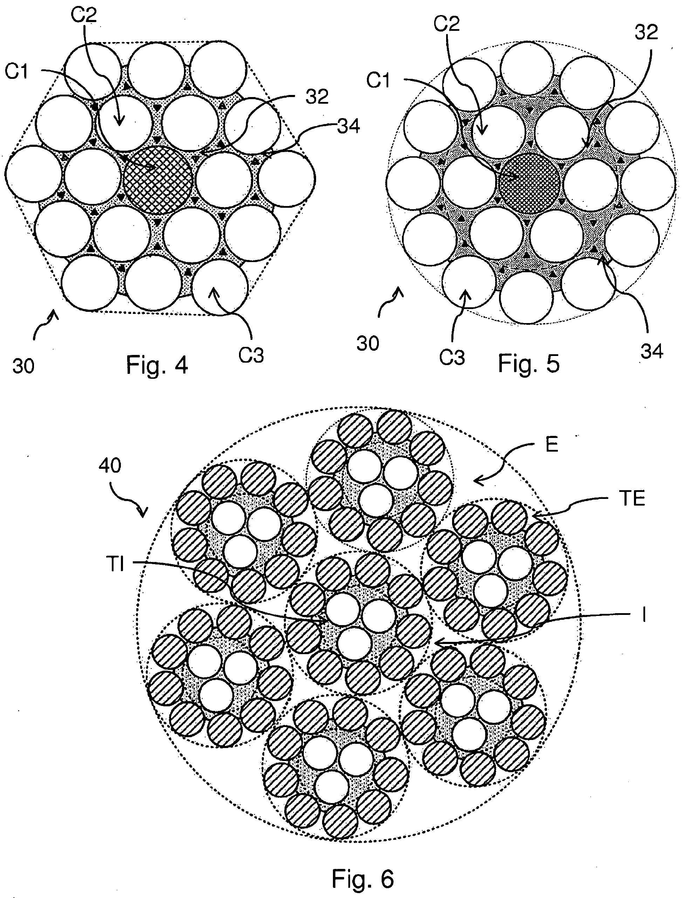

On a représenté sur la figure 4 un exemple de câble selon un troisième mode de réalisation. Les éléments analogues à ceux illustrés en référence aux précédents modes de réalisation sont désignés par des références identiques.

A la différence du câble selon le premier mode, le câble 30 selon le troisième mode comprend une couche externe C3 constituée de P fils externes de diamètre d3 enroulés en hélice autour de la couche intermédiaire C2 à un pas p3. Ici, M=1, N=6 et P=12.

Le câble 30 est du type compact. Ainsi, les sens d'enroulement des fils de couches sont tous identiques, c'est-à-dire soit dans la direction S (disposition "S/S/S"), soit dans la direction Z (disposition "Z/Z/Z") et p1=p2=p3.

En outre, dans cet exemple, d1>d2=d3. On pourrait aussi avoir d1=d2=d3.

Le câble 30 selon le troisième mode de réalisation comprend également une couche 34 d'une composition de caoutchouc gainant la couche intermédiaire C2. Pour toute longueur de câble de 2 cm ou plus, la couche 34 est présente dans chacun des interstices ou capillaires situes entre les N fils de la couche intermédiaire C2 et les P fils de la couche externe C3.

La composition de caoutchouc de la couche 34 est identique à celle de la couche 32.

On a représenté sur la figure 5 un exemple de câble selon un quatrième mode de réalisation. Les éléments analogues à ceux illustrés en référence aux précédents modes de réalisation sont désignés par des références identiques.

A la différence du câble selon le deuxième mode de réalisation, le câble 30 selon le quatrième mode comprend une couche externe C3 constituée de P fils externes de diamètre d3 enroulés en hélice autour de la couche intermédiaire C2 à un pas p3. Ici, M=1, N=6 et P=12.

En outre, dans cet exemple, d1>d2=d3. On pourrait aussi avoir d1=d2=d3.

Le câble 30 selon le cinquième mode de réalisation comprend également une couche de gomme 34 gainant la couche intermédiaire C2. Les caractéristiques de cette couche 34 se déduisent *mutatis mutandis* de celle de la couche 34 du quatrième mode de réalisation.

On a représenté sur la figure 6 un exemple de câble multitorons selon l'invention et désigné par la référence générale 40.

Le câble 40 multi-torons est du type à deux couches cylindriques. Le câble 40 comprend une couche interne I constituée de K toron(s) interne(s) TI, ici K=1. Le câble 40 comprend également une couche externe E constituée de L torons externes TE, ici L=6. Les torons externes TE sont enroulés en hélice autour de la couche interne I.

Chaque toron TI, TE est constitué d'un câble 30 selon le deuxième mode de réalisation illustré à la figure 3.

### EXEMPLES DE PRODUITS SEMI-FINI SELON L'INVENTION

Le câble selon l'invention peut être noyé dans un produit semi-fini, par exemple par calandrage, dans une composition de caoutchouc d'enrobage. La composition d'enrobage pourra être identique ou non à la composition de gainage du câble selon l'invention.

### EXEMPLE DE PROCEDE SELON L'INVENTION

On va maintenant décrire, à titre d'exemple, les principales étapes du procédé de fabrication du câble métallique gommé in situ 30 selon le premier mode de réalisation. Les procédés de fabrication des câbles selon les autres modes de réalisation s'en déduisent *mutatis mutandis.*

On fabrique tout d'abord le copolymère de styrène-butadiène par exemple par copolymérisation en solution. Dans une réaction de formation d'un co-catalyseur de copolymérisation, on mélange dans un réacteur maintenu sous azote un solvant, par exemple du cyclohexane, de l'éthylglycolate de baryum et du trioctylaluminium. On maintient la température de réaction à 40°C pendant 20 minutes. Dans une réaction de copolymérisation, on mélange, dans un réacteur maintenu sous azote, un solvant, par exemple du cyclohexane, du butadiène, du styrène, le co-catalyseur formé précédemment et un initiateur de réaction, par exemple le n-butyl lithium. On maintient la température de la réaction de copolymérisation au-dessus de 80°C pendant 40 minutes. On stoppe la réaction de copolymérisation avec du méthanol. Comme cela est bien connu de l'homme de l'art, on sépare l'élastomère de son solvant de polymérisation soit par évaporation sous vide, soit par entrainement à la vapeur d'eau. Le produit ainsi obtenu peut être par exemple séché dans une étuve.

On fabrique la composition de gainage du câble selon l'invention dans des mélangeurs appropriés, en utilisant deux phases de préparation successives bien connues de l'homme du métier: une première phase de travail ou malaxage thermomécanique (parfois qualifiée de phase "non-productive") à haute température, jusqu'à une température maximale (notée Tmax) comprise entre 110°C et 190°C, de préférence entre 130°C et 180°C, suivie d'une seconde phase de travail mécanique (parfois qualifiée de phase"productive") à plus basse température, inférieure à 50°C, ici égale à 30°C, phase de finition au cours de laquelle est éventuellement incorporé le système de vulcanisation.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante et éventuel agent de couplage), puis dans un deuxième temps, par exemple après une à deux minutes de malaxage, les éventuels agents de mise en oeuvre complémentaires et autres additifs divers. La durée totale du malaxage, dans cette phase non-productive, est de préférence comprise entre 2 et 10 minutes.

Après refroidissement du mélange ainsi obtenu, on incorpore alors le système de vulcanisation comprenant notamment le soufre, éventuellement l'accélérateur de vulcanisation, et si cela n'a pas été fait lors de la phase non productive, l'oxyde de zinc et l'acide stéarique, généralement dans un mélangeur externe tel qu'un mélangeur à deux cylindres. Le tout est alors mélangé (phase productive) pendant quelques minutes, par exemple entre 5 et 15 minutes.

On obtient alors la composition de gainage.

Puis, on assemble le câble et on gaine au moins une partie interne du câble, ici la couche interne C1 avec la composition de caoutchouc en mettant, par exemple, en oeuvre un procédé tel que décrit dans le document WO2009/083213. Dans ce procédé, on gaine la couche interne C1 entre l'étape d'assemblage de la couche interne C1 et l'étape d'assemblage de la couche externe C2.

Dans le cas des câbles des troisième et quatrième modes de réalisation illustrés sur les figure 4 et 5, on assemble le câble et on gaine les couches interne C1 et intermédiaire C2 en mettant, par exemple, en oeuvre un procédé tel que décrit dans le document WO2010/054791. Dans ce procédé, d'une part, on gaine la couche interne C1 entre l'étape d'assemblage de la couche interne C1 et l'étape d'assemblage de la couche intermédiaire C2 et, d'autre part, on gaine la couche intermédiaire C2 entre l'étape d'assemblage de la couche intermédiaire C2 et l'étape d'assemblage de la couche externe C3.

### TESTS COMPARATIFS

On a comparé une composition « Témoin » conforme à l'état de la technique connu de l'homme du métier et une composition « Invention » conforme à la composition du câble selon l'invention. La composition « Invention » est celle des couches 32, 34 des différents modes de réalisation des câbles selon l'invention ci-dessus.

A la différence de la composition « Témoin », la composition « Invention » comprend un copolymère de styrène-butadiène comprenant :
- une proportion en motifs styréniques comprise entre 25 et 35 % bornes incluses en poids du poids total du copolymère, et
- une proportion de liaison trans-1,4 comprise entre 73 et 83 % bornes incluses en poids du poids total de la partie butadiènique du copolymère.

On prépare chaque composition « Témoin » et « Invention » selon un procédé conforme au procédé selon l'invention à l'exception de la nature de l'élastomère diénique pour la composition « Témoin ».

Les quantités des composants des compositions « Témoin » et « Invention » sont rassemblées dans le tableau 1 ci-dessous et sont exprimées en parties pour 100 parties en poids d'élastomère (pce).

**Tableau 1**

| **Composition** | **Témoin** | **Invention** |
|---|---|---|
| Copolymère styrène-butadiène | 0 | 100 |
| Caoutchouc naturel | 100 | 0 |
| Noir de carbone | 45 | 45 |
| Anti-oxydant | 1,5 | 1,5 |
| ZnO | 8 | 8 |
| Acide stéarique | 1 | 1 |
| Soufre | 6 | 6 |
| Accélérateur | 1 | 1 |
| Naphténate de cobalt | 1 | 1 |

L'anti-oxydant est le N-1, 3-diméthylbutyl-N-phényl-para-phénylènediamine ("Santoflex 6-PPD"de la société FLEXSYS). L'accélérateur de vulcanisation est lé N-dicyclohexylbenzothiazol sulfénamide ("Santocure DCBS" de la société FLEXSYS).

### Propriétés avant cuisson

### Plasticité Mooney

La plasticité Mooney est réalisée en utilisant un consistomètre selon la norme ASTM D 1646-99. La mesure de plasticité Mooney se fait selon le principe suivant : le mélange généralement cru est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton mètre). Cette mesure est réalisée avant l'étape de gainage du câble métallique et moins de 24h après la fabrication de la composition de caoutchouc.

### Propriétés du câble

On a comparé un câble témoin de structure 1+6+12 et un câble selon l'invention de structure 1+6+12 conforme au quatrième mode de réalisation.

### Diamètre du câble

Le diamètre relatif est le rapport entre le diamètre du câble gommé « Témoin » sur le diamètre du câble observé.

### Test de perméabilité à l'air

Ce test permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est ici réalisé sur des câbles bruts de fabrication, ayant subi un enrobage et une cuisson ultérieurs. Les câbles bruts doivent être, préalablement au test, enrobés de l'extérieur par une gomme dite d'enrobage. Pour cela, une série de 10 câbles disposés parallèlement (distance inter-câble : 20 mm) est placée entre deux skims (deux rectangles de 80 x 200 mm) d'une composition de caoutchouc à l'état cru, chaque skim ayant une épaisseur de 3,5 mm ; le tout est alors bloqué dans un moule, chacun des câbles étant maintenu sous une tension suffisante (par exemple 2 daN) pour garantir sa rectitude lors de la mise en place dans le moule, à l'aide de modules de serrage ; puis on procède à la vulcanisation (cuisson) pendant 40 min à une température de 140°C et sous une pression de 15 bar (piston rectangulaire de 80 x 200 mm). Après quoi, on démoule l'ensemble et on découpe 10 éprouvettes de câbles ainsi enrobés, sous forme de parallélépipèdes de dimensions appropriées (par exemple 7x7x20 ou 7x7x30 mm), pour caractérisation. On utilise comme composition d'enrobage une composition de caoutchouc conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce); le module E10 réel sécant à 10% de la gomme d'enrobage est de 10 MPa environ.

Le test est réalisé sur une longueur prédéterminée (par exemple 3 cm voire 2 cm) de câble, enrobé donc par sa gomme d'enrobage environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de gomme pleine, c'est-à-dire sans câble.

Le débit d'air moyen mesuré (moyenne sur les 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale). Au test de perméabilité à l'air décrit ci-dessus, un câble dit "étanche à l'air" dans la direction longitudinale est caractérisé par un débit d'air moyen inférieur ou au plus égal à 0,2 cm³/min.

### Aspect extérieur

La note d'aspect extérieur correspond à une observation humaine du câble après sa fabrication. Si aucune particule de gomme n'est visible à l'oeil nu à la périphérie du câble, la note est égale à 5. Dans ce cas, l'homme du métier est incapable de faire une différence entre un câble gommé in situ d'un câble de structure analogue ne comportant pas de gomme. Si le câble est intégralement recouvert de gomme, la note est égale à 0. Entre ces deux notes, plus le câble est recouvert de gomme, plus la note est basse. La note 3 correspond à un câble comprenant des points isolés de débordement radial de la gomme.

**Tableau 2**

| **Propriétés avant cuisson** | **Témoin** | **Invention** |
|---|---|---|
| Mooney (UM) | 69,80 | 80,00 |

| **Propriétés du câble** | **Témoin** | **Invention** |
|---|---|---|
| Diamètre relatif | 1 | 0,99 |
| APA | 100 % | 90 % |
| Aspect extérieur | 3 | 5 |

La plasticité Mooney ML(1+4) de la composition « Invention » est significativement supérieure à celle de la composition « Témoin ». La fluidité de la composition « Invention » est donc inférieure à celle de la composition « Témoin » ce qui évite le débordement radial de la composition.

On note que le câble selon l'invention présente un diamètre sensiblement égal, voire légèrement inférieur à celui du câble témoin, ce qui témoigne d'un meilleur confinement de la composition de gainage à l'intérieur du câble.

On note que le câble selon l'invention présente une aptitude à la pénétration sensiblement équivalente à ceux du câble témoin. 100% des mesures effectuées sur le câble témoin conduisent à un débit inférieur ou au plus égal à 0,2 cm³/min et 90% des mesures effectuées sur le câble de l'invention conduisent à un débit inférieur ou au plus égal à 0,2 cm³/min. On considère que le résultat de 90% est largement suffisant pour que le câble soit suffisamment bien pénétré par la gomme.

On note que le câble selon l'invention présente une note d'aspect supérieure à celle du câble témoin. Ainsi, le câble selon l'invention ne présente pas de gomme à sa périphérie, ce qui permet d'éviter l'encrassement de l'installation de fabrication et donc les arrêts de cette dernière.

L'invention ne se limite pas aux modes de réalisation précédemment décrits.

Certains fils pourraient être à section non circulaire, par exemple déformé plastiquement, notamment à section sensiblement ovale ou polygonale, par exemple triangulaire, carrée ou encore rectangulaire.

Les fils, de section circulaire ou non, par exemple un fil ondulé, pourront être vrillés, tordus en forme d'hélice ou en zig-zag. Dans de tels cas, il faut bien sûr comprendre que le diamètre du fil représente le diamètre du cylindre de révolution imaginaire qui entoure le fil (diamètre d'encombrement), et non plus le diamètre (ou toute autre taille transversale, si sa section n'est pas circulaire) du fil d'âme lui-même.

Pour des raisons de faisabilité industrielle, de coût et de performance globale, on préfère mettre en oeuvre l'invention avec des fils linéaires, c'est-à-dire droit, et de section transversale conventionnelle circulaire.

Le câble peut également comprendre une couche de frettage constituée d'un fil de frette enroulé en hélice autour de la couche externe.

On pourra également combiner les caractéristiques des différents modes de réalisation décrits ou envisagés ci-dessus sous réserve que celles-ci soient compatibles entre elles.

## Revendications

1. Câble (30) métallique, **caractérisé en ce qu**'il est gommé in situ par une composition (32, 34) de caoutchouc comprenant un copolymère de styrène-butadiène comprenant:
- une proportion en motifs styréniques comprise entre 25 et 35 % bornes incluses en poids du poids total du copolymère, et
- une proportion de liaison trans-1,4 comprise entre 73 et 83 % bornes incluses en poids du poids total de la partie butadiènique du copolymère.

2. Câble (30) selon la revendication précédente, dans lequel la proportion en motifs styréniques est comprise entre 27 et 31 % bornes incluses en poids du poids total du copolymère.

3. Câble (30) selon l'une quelconque des revendications précédentes, dans lequel la proportion de liaisons trans-1,4 est comprise entre 75 et 81 % bornes incluses en poids du poids total de la partie butadiènique du copolymère.

4. Câble (30) selon l'une quelconque des revendications précédentes, dans lequel le copolymère de styrène-butadiène comprend une proportion de liaisons cis-1,4 comprise entre 12 et 21 % bornes incluses, de préférence entre 14 et 19 % bornes incluses en poids du poids total de la partie butadiènique du copolymère.

5. Câble (30) selon l'une quelconque des revendications précédentes, dans lequel le copolymère de styrène-butadiène comprend une proportion en motifs vinyliques comprise entre 1 et 7 % bornes incluses, de préférence entre 3 et 5 % bornes incluses en poids du poids total de la partie butadiènique du copolymère.

6. Câble (30) selon l'une quelconque des revendications précédentes, dans lequel la composition (32, 34) de caoutchouc comprend entre 50 et 100 pce bornes incluses, de préférence entre 70 et 100 pce bornes incluses et plus préférentiellement entre 80 et 100 pce bornes incluses du copolymère de styrène-butadiène.

7. Produit semi-fini, **caractérisé en ce qu**'il comprend un câble métallique (30) selon l'une quelconque des revendications précédentes noyé dans une composition de caoutchouc d'enrobage.

8. Pneumatique (10), **caractérisé en ce qu**'il comprend un câble métallique selon l'une quelconque des revendications 1 à 6.

9. Utilisation dans un câble gommé in situ d'un copolymère de styrène-butadiène comprenant :
- une proportion en motifs styréniques comprise entre 25 et 35 % bornes incluses en poids du poids total du copolymère, et
- une proportion de liaison trans-1,4 comprise entre 73 et 83 % bornes incluses en poids du poids total de la partie butadiènique du copolymère,
dans une composition de caoutchouc comme contrôleur de viscosité.

10. Procédé de fabrication d'un câble métallique (30) gommé in situ par une composition de caoutchouc (32, 34), **caractérisé en ce que :**
- on fabrique la composition de caoutchouc (32, 34) comprenant un copolymère de styrène-butadiène comprenant :
- une proportion en motifs styréniques comprise entre 25 et 35 % bornes incluses en poids du poids total du copolymère, et
- une proportion de liaison trans-1,4 comprise entre 73 et 83 % bornes incluses en poids du poids total de la partie butadiènique du copolymère.
- on gaine au moins une partie interne du câble métallique (30) avec la composition de caoutchouc (32, 34) entre deux étapes d'assemblage du câble métallique (30).

## Patentansprüche

1. Metallkord (30), **dadurch gekennzeichnet, dass** er in situ mit einer Kautschukzusammensetzung (32, 34), die ein Styrol-Butadien-Copolymer umfasst, das
- einen Anteil an Styroleinheiten zwischen 25 und 35 Gew.-% einschließlich der Grenzen, bezogen auf das Gesamtgewicht des Copolymers, und
- einen Anteil an trans-1,4-Bindungen zwischen 73 und 83 Gew.-% einschließlich der Grenzen, bezogen auf das Gesamtgewicht des Butadienteils des Copolymers,
umfasst, gummiert ist.

2. Kord (30) nach dem vorhergehenden Anspruch, wobei der Anteil an Styroleinheiten zwischen 27 und 31 Gew.-% einschließlich der Grenzen, bezogen auf das Gesamtgewicht des Copolymers, liegt.

3. Kord (30) nach einem der vorhergehenden Ansprüche, wobei der Anteil an trans-1,4-Bindungen zwischen 75 und 81 Gew.-% einschließlich der Grenzen, bezogen auf das Gesamtgewicht des Butadienteils des Copolymers, liegt.

4. Kord (30) nach einem der vorhergehenden Ansprüche, wobei das Styrol-Butadien-Copolymer einen Anteil an cis-1,4-Bindungen zwischen 12 und 21 Gew.-% einschließlich der Grenzen, vorzugsweise zwischen 14 und 19 Gew.-% einschließlich der Grenzen, bezogen auf das Gesamtgewicht des Butadienteils des Copolymers, aufweist.

5. Kord (30) nach einem der vorhergehenden Ansprüche, wobei das Styrol-Butadien-Copolymer einen Anteil an Vinyleinheiten zwischen 1 und 7 Gew.-% einschließlich der Grenzen, vorzugsweise zwischen 3 und 5 Gew.-% einschließlich der Grenzen, bezogen auf das Gesamtgewicht des Butadienteils des Copolymers, aufweist.

6. Kord (30) nach einem der vorhergehenden Ansprüche, wobei die Kautschukzusammensetzung (32, 34) zwischen 50 und 100 phe einschließlich der Grenzen, vorzugsweise zwischen 70 und 100 phe einschließlich der Grenzen und weiter bevorzugt zwischen 80 und 100 phe einschließlich der Grenzen, des Styrol-Butadien-Copolymers umfasst.

7. Halbzeug, **dadurch gekennzeichnet, dass** es einen in eine Kautschuk-Beschichtungszusammensetzung eingebetteten Metallkord (30) nach einem der vorhergehenden Ansprüche umfasst.

8. Reifen (10), **dadurch gekennzeichnet, dass** er einen Metallkord (30) nach einem der Ansprüche 1 bis 6 umfasst.

9. Verwendung eines Styrol-Butadien-Copolymers, das
- einen Anteil an Styroleinheiten zwischen 25 und 35 Gew.-% einschließlich der Grenzen, bezogen auf das Gesamtgewicht des Copolymers, und
- einen Anteil an trans-1,4-Bindungen zwischen 73 und 83 Gew.-% einschließlich der Grenzen, bezogen auf das Gesamtgewicht des Butadienteils des Copolymers,
umfasst, in einer Kautschukzusammensetzung als Viskositätsregler in einem in situ gummierten Kord.

10. Verfahren zur Herstellung eines in situ mit einer Kautschukzusammensetzung (32, 34) gummierten Metallkords (30), **dadurch gekennzeichnet, dass** man
- die Kautschukzusammensetzung (32, 34), die ein Styrol-Butadien-Copolymer umfasst, das
- einen Anteil an Styroleinheiten zwischen 25 und 35 Gew.-% einschließlich der Grenzen, bezogen auf das Gesamtgewicht des Copolymers, und
- einen Anteil an trans-1,4-Bindungen zwischen 73 und 83 Gew.-% einschließlich der Grenzen, bezogen auf das Gesamtgewicht des Butadienteils des Copolymers,
umfasst, herstellt und
- mindestens einen inneren Teil des Metallkords (30) zwischen zwei Schritten des Zusammenfügens des Metallkords (30) mit der Kautschukzusammensetzung (32, 34) umhüllt.

## Claims

1. Metal cord (30) **characterized in that** it is rubberized in situ by a rubber composition (32, 34) comprising a styrene-butadiene copolymer comprising:
- a proportion of styrene units of between 25% and 35%, limits included, by weight of the total weight of the copolymer, and
- a proportion of trans-1,4-bonds of between 73% and 83%, limits included, by weight of the total weight of the butadiene part of the copolymer.

2. Metal cord (30) according to the preceding claim, in which the proportion of styrene units is between 27% and 31%, limits included, by weight of the total weight of the copolymer

3. Metal cord (30) according to either one of the preceding claims, in which the proportion of trans-1,4-bonds is between 75% and 81%, limits included, by weight of the total weight of the butadiene part of the copolymer.

4. Metal cord (30) according to any one of the preceding claims, in which the styrene-butadiene copolymer comprises a proportion of cis-1,4-bonds of between 12% and 21%, limits included, preferably between 14% and 19%, limits included, by weight of the total weight of the butadiene part of the copolymer.

5. Metal cord (30) according to any one of the preceding claims, in which the styrene-butadiene copolymer comprises a proportion of vinyl units of between 1% and 7%, limits included, preferably between 3% and 5%, limits included, by weight of the total weight of the butadiene part of the copolymer.

6. Metal cord (30) according to any one of the preceding claims, in which the rubber composition (32, 34) comprises between 50 and 100 phr, limits included, preferably between 70 and 100 phr, limits included, and more preferably between 80 and 100 phr, limits included, of the styrene-butadiene copolymer.

7. Semifinished product, **characterized in that** it comprises a metal cord (30) according to any one of the preceding claims embedded in a coating rubber composition.

8. Tyre (10), **characterized in that** it comprises a metal cord according to any one of Claims 1 to 6.

9. Use, in a cord rubberized in situ, of a styrene-butadiene copolymer comprising:
- a proportion of styrene units of between 25% and 35%, limits included, by weight of the total weight of the copolymer, and
- a proportion of trans-1,4-bonds of between 73% and 83%, limits included, by weight of the total weight of the butadiene part of the copolymer,
in a rubber composition as viscosity controller.

10. Process for the manufacture of a metal cord (30) rubberized in situ by a rubber composition (32, 34), **characterized in that**:
- the rubber composition (32, 34) comprising a styrene-butadiene copolymer comprising:
- a proportion of styrene units of between 25% and 35%, limits included, by weight of the total weight of the copolymer, and
- a proportion of trans-1,4-bonds of between 73% and 83%, limits included, by weight of the total weight of the butadiene part of the copolymer,
is manufactured,
- at least an internal portion of the metal cord (30) is sheathed with the rubber composition (32, 34) between two stages of assembling the metal cord (30).
